# EUROPEAN PATENT APPLICATION

(11) **EP 1 816 468 A1**
(43) Date of publication of application: **08.08.2007**
(21) Application number: 07001856.9
(22) Date of filing: 29.01.2007
(51) Int. Cl.: G01N 23/16, G01B 11/00, G01B 15/00, G01B 7/06

(54) **Apparatus and process for measuring the profile of at least one physical quantity of a film material**

(30) Priority: 01.02.2006 IT MI20060162
(71) Applicant: ELECTRONIC SYSTEMS S.P.A., 28015 Momo (NO) (IT)
(72) Inventor: Masotti, alessandro, 21013 Gallarate (VA) (IT); Traficante, Francesco, 21052 Busto Arsizio (VA) (IT); Saini, Marco, 28041 Arona (VA) (IT)
(74) Representative: Premru, Rok

(57) **Abstract**

An apparatus for measuring the profile of at least one physical property of a film material or the like which runs in a feed direction across a space, comprising first gage means for measuring at least one physical property of a film material across the space along a feed direction, said first gage means comprising at least one transmitter unit and at least one receiver unit on opposite sides of said space; second gage means for measuring at least one physical property of a film material across the space along a feed direction, said second gage means comprising at least one transmitter unit and at least one receiver unit on opposite sides of said space; said first and second gage means for measuring at least one physical property of a film material being adapted to scan a first inspection segment and a second inspection segment respectively, which are disposed in aligned relation to each other transverse to said feed direction, characterized in that said first and second gage means can be selectively driven for independently controlling the motion of each gage mean during a full scan cycle.

## Description

An apparatus and a process for measuring the profile of at least one physical quantity of a moving material, such as a film, a web, a sheet or the like, are herein disclosed.

Independent variables are known to be involved in the process of manufacture of a film material, that may affect the transverse or the longitudinal profile ofthe physical properties of the material.

For example, the eccentricity of calender rollers or coating rollers causes periodic variations in thickness or basis weight profiles in the longitudinal direction.

Longitudinal thickness or basis weight variations may be also caused by irregular material feed to extruder heads.

On the other hand, parallelism errors between calender rollers can cause variations in thickness or basis weight profile in the transverse direction.

Hence, for fast and accurate adjustment of the properties of a film material, the longitudinal component of profile variation in the quantity being measured (i.e. profile variation in the physical quantity being measured parallel to the feed direction of the film material, i.e. the machine direction) shall be differentiated from the component of the quantity being measured orthogonal to the feed direction of the film.

For this purpose, apparatuses are known for measuring the profile of at least one physical quantity of a film material being fed, which have two gage devices which simultaneously measure one or more physical quantities ofthe film material being manufactured.

For instance, EP-B1-0 546 362, by the applicant hereof, discloses a scanner equipment having two gage devices for measuring the thickness of a moving film, which are located on two pairs of parallel guides.

One of the gage devices is held still in a desired position, to provide a reading function along a directrix parallel to the feed direction of the film material (thereby directly obtaining the thickness profile variation in the longitudinal direction), while the other gage device repeatedly scans the moving material orthogonal to the feed direction thereof (thereby obtaining the profile variation on a zig-zag path on the material, corresponding to the combination of longitudinal and transverse variations).

The longitudinal profile is directly known from the fixed gage device, whereas the transverse profile may be obtained at each scan by determining the difference between the profiles detected by the two gage devices and by adding to this difference the average value of the profile measured by the fixed sensor.

However, the apparatus disclosed in EP-B 1-0 546 362 suffers from various drawbacks.

First, in this measuring mode, the apparatus has the same scanning speed as a single - head scanner, i.e. half the speed of an apparatus having two moving gages, because one of the two gage devices is fixed.

Furthermore, this apparatus has substantial reliability problems, due to the fact that the longitudinal progress of the profile derives from measurements made on a single transverse coordinate.

Indeed, the position selected for fixed - point measurements may fall within an area ofthe transverse thickness profile which exhibits a systematic thickness difference having a width of a few centimeters, which forms a groove or a bead on the material.

Due to the inevitable side skidding motion of the film material, the measurements made by the fixed gage indicates continuous and sudden thickness variations which are not caused by actual thickness variations at that point, but by skidding.

This problem in longitudinal measurement is reflected in the algorithm for transverse profile differentiation.

In addition to the above measurement drawbacks, another significant problem is the presence of two pairs of parallel guides for translation of the gages, which involves a higher cost and size of the apparatus.

EP-B1-0 127 279 discloses a few embodiments of an X-ray apparatus for measuring the thickness profile of a moving film material, comprising two moving sensors on aligned or parallel inspection lines.

In all embodiments of EP-B1-0 127 279, the sensors are actuated by the same motor and the same transmission system, wherefore there is a mutual relation between the motions of the two sensors.

EP-B1-0 127 279 provides no indication about processing of the information received from the two moving sensors.

Nevertheless, as better explained below, the apparatus disclosed by EP-B1-0 127 279 cannot satisfactorily differentiate profile variations of the quantity being measured in the longitudinal direction from profile variations in the transverse direction.

Furthermore, the above prior art measuring apparatuses require complex and expensive solutions for calibration of the gages.

In prior art scanner apparatuses, the procedures for calibrating the measuring sensors require measurements to be directly aligned on the material.

Due to this condition, the apparatus is not available for use until it completes all calibration procedures.

A further problem associated to prior art apparatuses and scanning measurement processes is that a rather long transient is required for adjusting the flatness of the material at each startup of the plant.

As a result, each time the film material manufacturing plant is started, a considerable amount of material wastes may be generated due to the non availability of the gage.

For example, in tire rubber calender plants a transient of up to about 15 minutes may be required, wherefore the amount of waste material is of the order of about 100 - 200 meters.

The object of this invention is to obviate at least some of prior art problems and particularly those set out hereinbefore.

This object is fulfilled by an apparatus according to the features of claims 1, 7, 13 and by a process according to the features of claim 18.

Further advantages may be achieved by the additional features of the dependent claims.

Some possible embodiments of the apparatus and process are illustrated in the following enclosed figures, where:
- Fig. 1 is a perspective view that schematically shows a first embodiment of a scanner apparatus having two gages for measuring at least one physical quantity of a film material;
- Fig. 2 is a partly sectional front view of the apparatus of Fig. 1;
- Fig. 3 is a partly sectional side view of the apparatus of Fig. 1;
- Fig. 4 is a perspective view that schematically shows a second embodiment of a scanner apparatus having two gages for measuring the thickness of a nonmetallic film material;
- Fig. 5 is a partly sectional front view of the apparatus of Fig. 4;
- Fig. 6 is a partly sectional side view of the apparatus of Fig. 4;

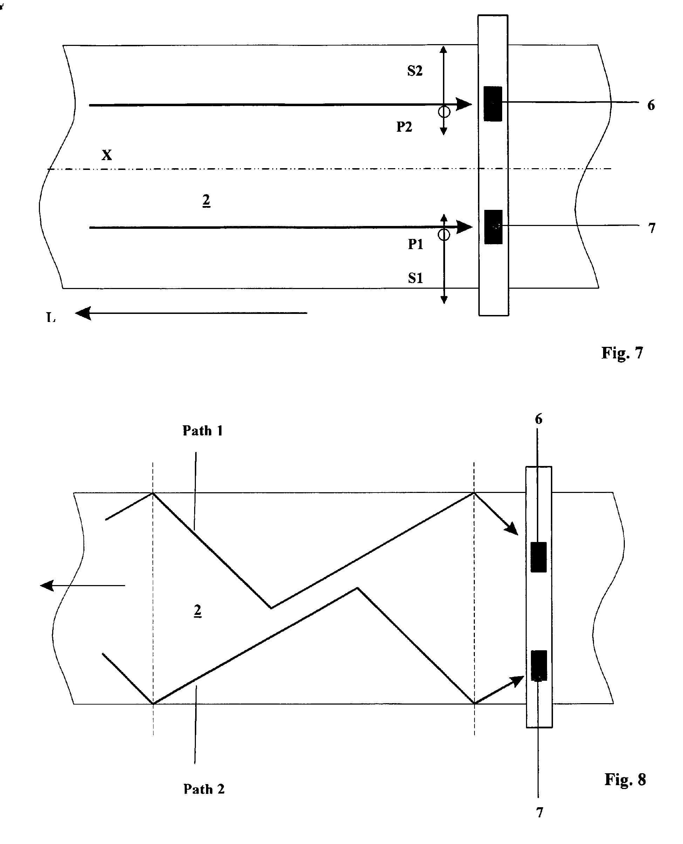

- Fig. 7 shows the paths of the inspection points of the gages of the apparatus as shown in Fig. I and Fig. 4 during start up of a film material manufacturing plant; and
- Fig. 8 shows a possible path of the inspection points of the gages of the apparatus as shown in Fig. 1 and 4 on the running material (where each gage scans a portion of the overall length of the space covered by the film material).
- Fig. 8a shows an example of where the reading spots of the two measuring devices are stationed.

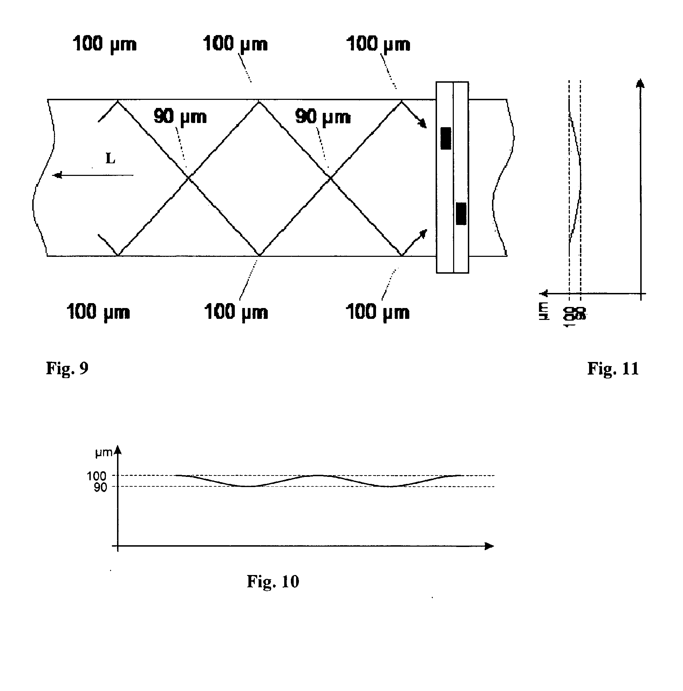

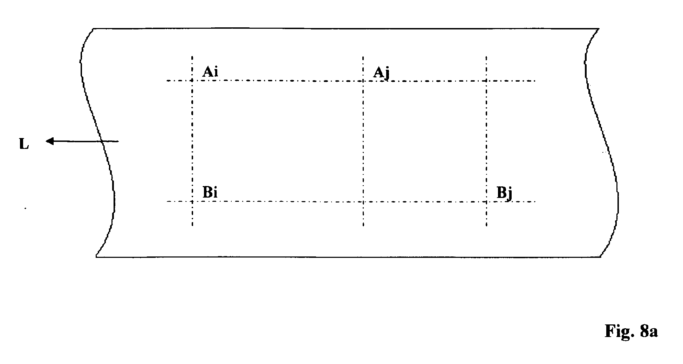

For a better understanding of the advantages achieved using the apparatus and process as described and claimed herein, Fig. 9, 10 and 11 show an example where information from two scanning heads (of a prior art apparatus) does not allow to differentiate the source of profile variation.

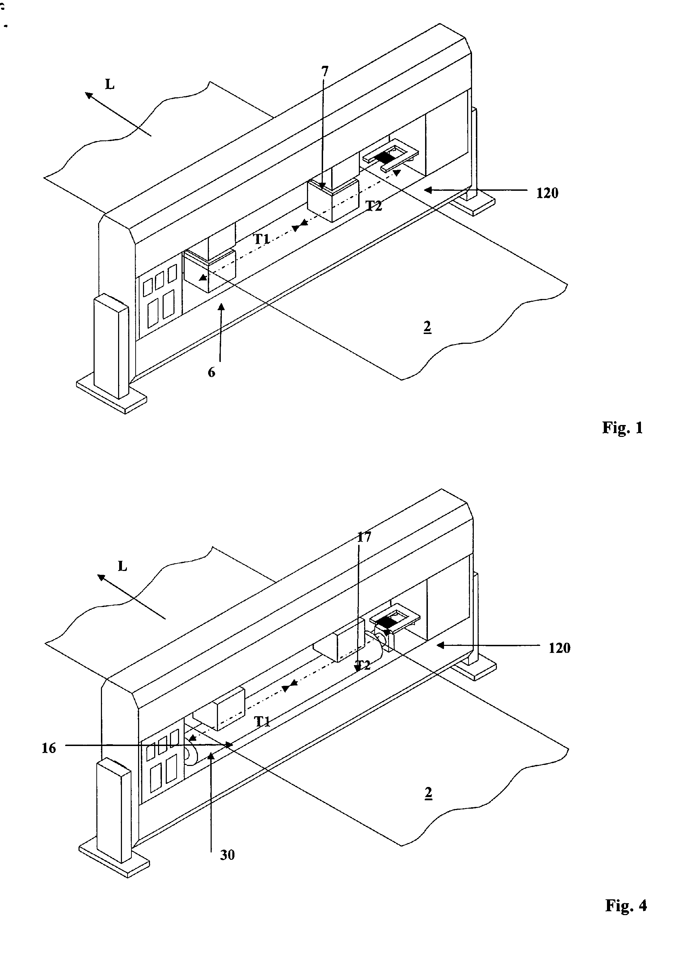

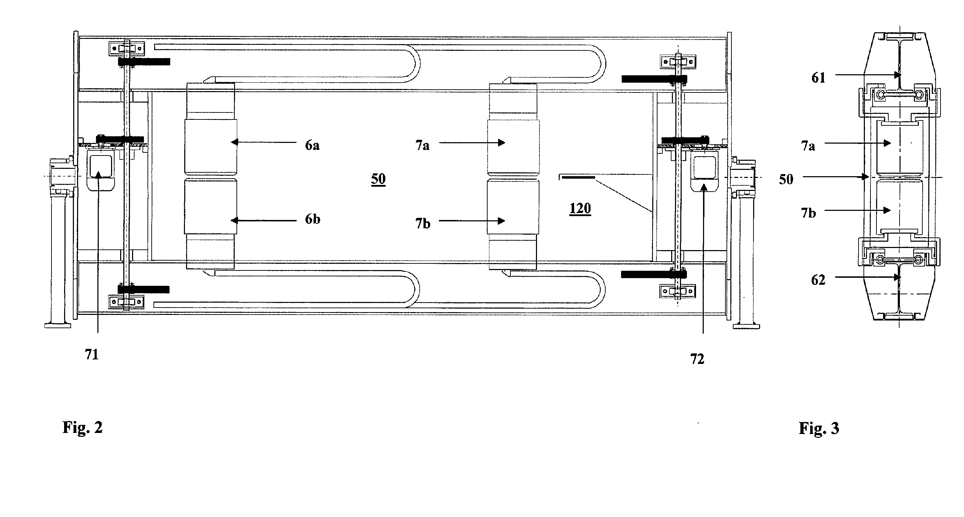

Referring to the reference numerals of the drawings, Fig. 1, 2 and 3 show an apparatus 1 for measuring the profile of at least one physical property e.g. the basis weight - of a film material 2 which runs in a feed direction L across a space 50.

The apparatus I comprises first and second gage means 6, 7 for measuring at least one physical property of a film material 2 across the space 50 along a feed direction L.

The first gage means 6 comprise at least one transmitter unit 6a - e.g. a β-ray, IR-ray or X-ray transmitter - and at least one receiver unit 6b for receiving the radiation transmitted by the transmitter unit 6a.

The transmitter unit 6a and the receiver unit 6b of the first gage means 6 are disposed on opposite sides of the space 50.

Also the second gage means 7 comprise at least one transmitter unit 7a (of the same type as the transmitter unit 6a) and at least one receiver unit 7b (of the same type as the receiver unit 6b) disposed on opposite sides of the space 50.

The first and second gage means 6, 7 for measuring at least one physical property of the film material 2 are adapted to scan a first inspection segment T1 and a second inspection segment T2 respectively, that are disposed transverse to the feed direction L in aligned relation to each other.

It shall be noted that the first and second gage means 6, 7 - for measuring the film material 2 across the space 50 - are selectively movable.

For this purpose, separate motor means 71, 72 and separate drive means are provided for selectively driving the gage means 6 and the gage means 7.

Thus, the motion of each gage mean 6, 7 may be independently controlled during a full scan cycle.

As explained hereinafter, this feature may be utilized for better differentiation between the transverse component and the longitudinal component of the profile of the quantity (or quantities) being measured.

Furthermore, should any failure occur to the motor or drive of one of the two gage means, operation of the measuring apparatus might continue in the traditional way (i.e. with a single gage scanning the whole width of the space 50 across which the film material extends).

The receiver units 6b, 7b of the first and second gage means 6, 7 are preferably movable along a single guide 61, disposed on one side of the space 50 across which the film material 2 runs in a feed direction L.

More preferably, the transmitter units 6a, 7a and the receiver units 6b, 7b of the first and second gage means 6, 7 are movable along two parallel guides 61, 62 disposed on opposite sides of the space 50 across which the film material 2 runs in a feed direction L.

In the embodiments providing a single guide 61 or two parallel guides 61, 62 on opposite sides of the space 50 - the gage means 6, 7 may be calibrated in a single calibration station 120, which is aligned with the first and second inspection segments T1, T2 and is disposed on one side of the space 50 across which the film material 2 extends.

When needed, the first and second gage means 6, 7 for measuring at least one physical quantity are selectively moved to the calibration station 120.

Preferably, the first and second gage means 6, 7 are adapted to operate on partly or wholly overlapping inspection segments T1, T2.

In a modified embodiment (though substantially identical as viewed from the outside), the first gage means 6 include a pair of surface distance gages 6a, 6b, disposed on opposite sides of the space 50, and operating in substantially coaxial regions.

Similarly, the second gage means 7 include a pair of surface distance gages 7a, 7b, disposed on opposite sides ofthe space 50, and operating in substantially coaxial regions.

In this case, the gage means 6, 7 measure the distances of the opposite surfaces of the film material 2 and the film thickness is determined as a difference between the distance between the pairs of gages 6a, 6b; 7a, 7b and the distances detected by such gages.

The first and second means 6, 7 for measuring the thickness of the film material 2 across the space 50 may be fluidic reflection devices, such as those disclosed in EP 0 811 826, by the applicant hereof, or conventional optical devices.

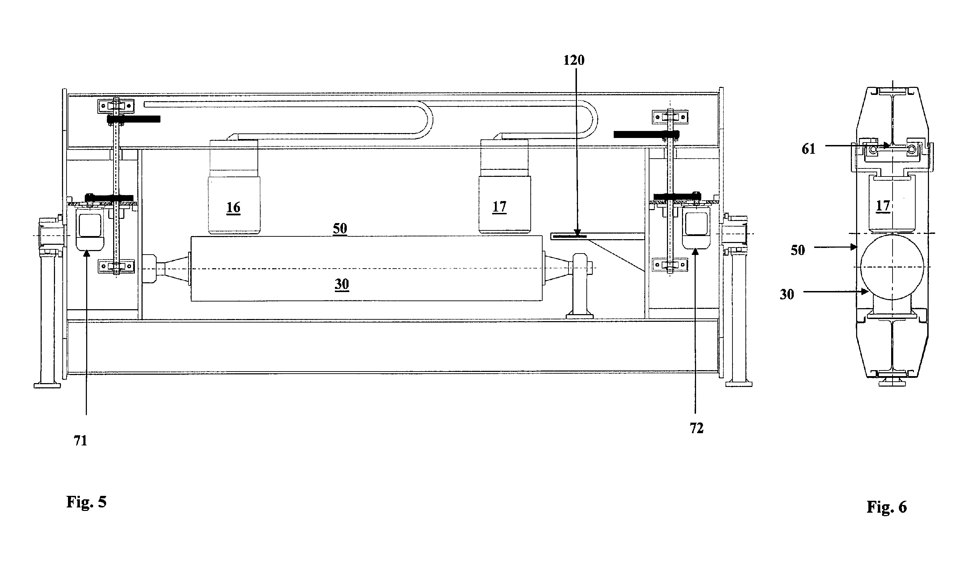

In a second embodiment (see Fig. 4, 5 and 6) for measuring the thickness profile of a nonmetallic and non ferromagnetic film material or the like 2, the apparatus comprises a space 50 to be crossed by a film 2, and a metal reference surface 30 on a first side of the space 50 for allowing the film material 2 to run along a feed direction L.

The apparatus comprises first means 16 and second means 17 for measuring the thickness of a nonmetallic film material 2, running along the feed direction L across the space 50 on said metal reference surface 30.

The first means 16 for measuring the thickness of the film material 2 are disposed on a second side of such space 50 and comprise a first inductive gage (not shown) for measuring the distance of the metal reference surface 30 (i.e. the bottom side of the film material 2 as the latter runs on said metal reference surface), and first means (not shown) for measuring the distance of the exposed surface (i.e. the top surface) of the film material 2.

The first inductive gage and the first means for measuring the distance of the exposed surface of the film material 2 are integral with each other and operate in substantially coaxial regions.

Also, the second means 17 for measuring the thickness of a film material 2 are disposed on the same side ofthe space 50 as the first means 16 for measuring the thickness of the film material 2.

The second gage 17 also comprises a second inductive gage (not shown) for measuring the distance of said metal reference surface 30 (i.e. the bottom side oF the film material as the latter runs on the metal reference surface 30), and second means (not shown) for measuring the distance of the exposed surface (i.e. opposite the surface in contact with the reference surface) ofthe film material 2.

The second inductive gage and the second means for measuring the distance of the exposed surface of the film material 2 are integral with each other and operate in substantially coaxial regions.

Devices for measuring on an same axis the distance of opposite surfaces of a nonmetallic film arc disclosed, for example, in EP 0 811 826 by the applicant hereof, wherein the distance of the exposed surface of the film material is detected by fluidic reflection devices.

As an alternative, the distance of the exposed surface of the film 2 may be detected using conventional optical devices.

The first and second gage means 16, 17 for measuring the thickness of the film material 2 across the space 50 are adapted to scan a first inspection segment T1 and a second inspection segment T2 respectively, which are disposed in aligned relation to each other transverse to the feed direction L of the film 2.

Once again, in this embodiment of the apparatus, the first and second gage means 16, 17 for measuring the thickness of the film material 2 can be selectively driven, for independently controlling the motion of each gage means 16, 17 during a full scan cycle.

For this purpose, separate motor means 71, 72 and separate drive means are provided for driving the first and second thickness gage means 16, 17.

This feature may be utilized for better differentiation between the transverse component and the longitudinal component of the profile of the quantity (or quantities) being measured.

Furthermore, should any failure occur to the motor or drive of one of the two gage means, operation of the measuring apparatus might continue in the traditional way (i.e. with a single gage scanning the whole width ofthe space 50 across which the film material extends).

Preferably, the first and second means 16, 17 for measuring the thickness of the nonmetallic film material 2 are movable along a single guide 61, disposed on one side of the space 50 across which the film material 2 runs in a feed direction L.

Thus the first and second means 16, 17 for measuring the thickness of the material may be calibrated in a single calibration station 120, which is aligned with the first and second inspection segments T1, T2 and is disposed on one side of the space 50 across which the film material 2 extends.

When needed, the first and second means 16, 17 for measuring the thickness of the nonmetallic and non ferromagnetic film material are selectively moved to the calibration station 120.

The metal reference surface 30 may be a metal idle roll or at least having a metal surface.

Preferably, the first and second means 16, 17 for measuring the thickness of the film material 2 are adapted to operate on partly or wholly overlapping inspection segments T1, T2.

The above apparatuses obviously comprise computer means for processing the information from the gage means 6, 7; 16, 17.

The opportunity for independently driving the gage means 6, 7; 16, 17 of the above apparatuses may be utilized for faster adjustment of the transverse profile of the properties of the film material 2 at each startup of the plant.

Indeed, as the plant is started, the transverse basis weight or thickness profile of the moving film material 2, having a longitudinal axis of symmetry X, may be quickly adjusted, through the steps of:
- placing first gage means 6 at a first inspection point P1, contained in a first segment S1 transverse to the feed direction L of the film material 2;
- placing second gage means 7 for measuring at least one physical quantity at a second inspection point P2, contained in a second segment S2 transverse to the feed direction L of the film material 2, wherein the first and second segments S1, S2 are disposed on opposite sides with respect to the longitudinal axis of symmetry X of the film material 2;
- feeding the film material 2 along a feed direction L,
and periodically repeating the steps of:
- measuring at least one physical quantity of the film material 2 at the first inspection point P1;
- measuring at least one physical quantity of such film material 2 at the second inspection point P2;
- determining the average value ofthe at least one physical quantity in the transverse direction;
- determining the profile of the at least one physical quantity in the transverse direction by approximating the transverse profile to a straight line (such approximation being reasonable in the first steps of profile flatness adjustment, for quickly correcting coarser errors).

Preferably, the inspection points P1, P2 are at a distance of 1/8 to 3/8 of the overall width of the film material 2 from the longitudinal axis of symmetry X and, more preferably, they are symmetrical with respect to the longitudinal axis of symmetry X of the film.

The use of a single guide 61 or of two parallel guides 61, 62 on opposite sides of the space 50 allows to considerably reduce the size and weight of the apparatus (which are reflected on the structure of the film material manufacturing plant) as well as the associated manufacturing costs.

The opportunity of calibrating both gages 6, 7; 16, 17 in a single calibration station 120 affords an overall cost reduction and further allows "alignment" of the gages 6, 7; 16, 17, thereby minimizing behavior differences between the gages.

This is an important advantage because a complete transverse profile can be only achieved by combining the measurements of both gages.

Any behavior differences between the two gages generate errors in the detection of the overall profile.

A further advantage deriving from the provision of the calibration station 120 is that it allows alignment of the two measurements even when the material is not moving, i.e. before startup.

By this arrangement, the apparatus is ready for measurement since startup, when gage information is more useful for bringing the plant to a steady state in the shortest time.

It shall be noted that the above apparatuses may be used to carry out a process for measuring the profile of at least one physical property of a film material 2 having a longitudinal axis of symmetry X, comprising the steps of:
- feeding said film material 2 along a feed direction L;
- executing a scan cycle by measuring, at a predetermined rate, at least one physical quantity of the film material 2 along a first plurality of measuring points (A1, ..., An) of a first measuring path (path 1);
- executing a scan cycle by measuring, at a predetermined rate, at least one physical quantity of the film material 2 along a second plurality of measuring points (B1, .., Bn) of a second measuring path (path 2), that is aligned to the first measuring path (path 1);
wherein, for each pair of measuring points Ai (x1, y*) and Bi (x2, y*) having the same longitudinal coordinate y* (i.e. in the material feed direction), there is at least one more pair of measuring points Aj (x1, y3) and Bj (x2, y4) having the same transverse coordinates as the previous points Ai, Bi but different longitudinal coordinates (y3 is different from y4).

An example of this reading modality is displayed in Fig. 8a.

For example, in a possible operation, the two measuring paths (path 1, path 2) are conformed in such a manner that one (path 1; path 2) is the overturned representation of the other (path 2; path 1) both with respect to the feed direction (L) and with respect to the direction orthogonal to the feed direction (L).

By performing measurements on points having the same longitudinal coordinate (parallel to the feed direction) but different transverse coordinates, variations in the physical quantity being measured may be effectively differentiated between the Machine Direction and the Cross Direction.

This avoids typical prior art uncertainties, like the one illustrated in Fig. 9 to 11, where measurements allow to detect a thickness profile variation, but do not allow to ascertain whether such variation derives from a longitudinal or a transverse variation.

Furthermore, since both heads are movable, any risk of disturbances caused by oscillation or skidding ofthe moving film material may be avoided.

The apparatuses disclosed herein allow film scanning to occur at twice the speed obtainable by those of EP 0 546 362, assuming equal gage speeds, i.e. transverse profiles are completed at twice the rate.

Should any failure occur to one sensor or drive, a full transverse profile may be still obtained, by reducing the longitudinal component through suitable filtering of the transverse profile.

## Claims

1. An apparatus (1) for measuring the profile of at least one physical property of a film material (2) or the like which runs in a feed direction (L) across a space (50), comprising:
- first gage means (6) for measuring at least one physical property of a film material (2) across the space (50) along a feed direction (L), said first gage means (6) comprising at least one transmitter unit (6a) and at least one receiver unit (6b) on opposite sides of said space (50);
- second gage means (7) for measuring at least one physical property of a film material (2) across the space (50) along a feed direction (L), said second gage means (7) comprising at least one transmitter unit (7a) and at least one receiver unit (7b) on opposite sides of said space (50);
said first and second gage means (6, 7) for measuring at least one physical property of a film material (2) being adapted to scan a first inspection segment (T1) and a second inspection segment (T2) respectively, which are disposed in aligned relation to each other transverse to said feed direction (L),
**characterized in that** said first and second gage means (6, 7) can be selectively driven for independently controlling the motion of each gage means (6, 7) during a full scan cycle.

2. An apparatus as claimed in claim 1, wherein said receiver units (6b, 7b) of said first and second gage means (6, 7) are movable along a single guide (61), disposed on one side of said space (50) across which a film material (2) runs in a feed direction (L).

3. An apparatus as claimed in claim 1, wherein said transmitter units (6a, 7a) and said receiver units (6b, 7b) of said first and second gage means (6, 7) are movable along two guides (61, 62) disposed on opposite sides of said space (50) across which a film material (2) runs in a feed direction (L).

4. An apparatus as claimed in claim 2 or 3, further comprising a calibration station (120) for said first and second gage means (6, 7), said calibration station (120) being aligned with said first and second inspection segments (T1, T2) so that said first and second gage means (6, 7) for measuring at least one physical quantity may he selectively moved to said calibration station (120).

5. An apparatus as claimed in any one of the preceding claims, wherein said first and second gage means (6, 7) are adapted to operate on partly overlapping inspection segments (T1, T2).

6. An apparatus as claimed in any one of claims 1 to 4, wherein said first and second gage means (6, 7) are adapted to operate on wholly overlapping inspection segments (T1, T2).

7. An apparatus (21) for measuring the thickness profile of a nonmetallic film material or the like (2) which runs in a feed direction (L) across a space (50), comprising:
- a metal reference surface (30) on a first side of said space (50) for allowing a film material (2) to run along a feed direction (L);
- first means (16) for measuring the thickness of a film material (2) which runs along said feed direction (L) across said space (50) on said metal reference surface (30), said first means (16) for measuring the thickness of a film material (2) being disposed on a second side of said space (50) and comprising a first inductive gage for measuring the distance of said metal reference surface (30), and first means for measuring the distance of the exposed surface of a film material (2) running on said metal reference surface (30), said first inductive gage and said first means for measuring the distance of the exposed surface of a film material (2) being integral with each other and operating in substantially coaxial regions;
- second means (17) for measuring the thickness of a film material (2) which runs along said feed direction (L) across said space (50) on said metal reference surface (30), said second means (17) for measuring the thickness of a film material (2) being disposed on a second side of said space (50) and comprising a second inductive gage for measuring the distance of said metal reference surface (30), and second means for measuring the distance of the exposed surface of a film material (2) running on said metal reference surface (30), said second inductive gage and said second means for measuring the distance of the exposed surface of film material (2) being integral with each other and operating in substantially coaxial regions;
said first and second gage means (16, 17) for measuring the thickness of a film material (2) across a space (50) being adapted to scan a first inspection segment (T1) and a second inspection segment (T2) respectively, transverse to said feed direction (L),
**characterized in that** said first and second gage means (16, 17) for measuring the thickness of a film material (2) can be selectively driven for independently controlling the motion of each gage mean (16, 17) during a full scan cycle.

8. An apparatus as claimed in claim 7, wherein said first and second gage means (16, 17) for measuring the thickness of a nonmetallic film material (2) are movable along a single guide (61), disposed on one side of said space (50) across which a film material (2) runs in a feed direction (L).

9. An apparatus as claimed in claim 8, further comprising a calibration station (120) for said first and second gage means (16, 17) for measuring the thickness of a nonmetallic film material, said calibration station (120) being aligned with said first and second inspection segments (T1, T2) so that said first and second gage means (16, 17) for measuring the thickness of a nonmetallic film material may be selectively moved to said calibration station (120).

10. An apparatus as claimed in claim 7, 8 or 9, wherein said metal reference surface (30) is a roll.

11. An apparatus as claimed in any one of claims 7 to 10, wherein said first and second gage means (16, 17) for measuring the thickness of a film material (2) are adapted to operate on partly overlapping inspection segments (T1, T2).

12. An apparatus as claimed in any one of claims 7 to 10, wherein said first and second gage means (16, 17) for measuring the thickness of a film material (2) are adapted to operate on wholly overlapping inspection segments (T1, T2).

13. An apparatus (31) for measuring the thickness profile of a nonmetallic film material or the like (2) which runs in a feed direction (L) across a space (50), comprising:
- first means (6) for measuring the thickness of a film material (2) across said space (50) along said feed direction (L), said first means (6) comprising a pair of surface distance gages (6a, 6b), disposed on opposite sides of said space (50), and operating in substantially coaxial regions;
- second means (7) for measuring the thickness of a film material (2) across said space (50) along said feed direction (L), said second means (7) comprising a pair of surface distance gages (7a, 7b), disposed on opposite sides of said space (50), and operating in substantially coaxial regions;
said first and second gage means (6, 7) for measuring the thickness of a film material (2) across a space (50) being adapted to scan a first inspection segment (T1) and a second inspection segment (T2) respectively, transverse to said feed direction (L),
**characterized in that** said first and second gage means (16, 17) for measuring the thickness of a film material (2) can be selectively driven for independently controlling the motion of each gage means (16, 17) during a full scan cycle.

14. An apparatus as claimed in claim 13, wherein said first and second gage means (6, 7) for measuring the thickness of film material (2) are movable along two guides (61, 62) disposed on opposite sides ofsaid space (50) across which a film material (2) runs in a feed direction (L).

15. An apparatus as claimed in claim 14, further comprising a calibration station (120) for said first and second gage means (6, 7) for measuring the thickness of a film material, said calibration station (120) being aligned with said first and second inspection segments (T1, T2) so that said first and second gage means (6, 7) for measuring the thickness of a film material (2) may be selectively moved to said calibration station (120).

16. An apparatus as claimed in any one of claims 13 to 15, wherein said first and second gage means (6,7) for measuring the thickness of a film material (2) are adapted to operate on partly overlapping inspection segments (T1,T2).

17. An apparatus as claimed in any one of claims 13 to 15, wherein said first and second gage means (6, 7) for measuring the thickness of a film material (2) are adapted to operate on wholly overlapping inspection segments (T1, T2).

18. A process for measuring the profile of at least one physical property of a film material (2) having a longitudinal axis of symmetry (X), comprising the steps of:
- feeding said film material (2) along a feed direction (L);
- executing a scan cycle by measuring, at a predetermined rate, at least one physical quantity of the film material (2) along a first plurality of measuring points (A1, ..., An) of a first measuring path (path 1);
- executing a scan cycle by measuring, at a predetermined rate, at least one physical quantity of the film material (2) along a second plurality of measuring points (B1, ..., Bn) of a second measuring path (path 2),
wherein, for each pair of measuring points Ai (x1, y*) and Bi (x2, y*) having the same longitudinal coordinate y*, there is at least one more pair of measuring points Aj (x1, y3) and Bj (x2, y4) having the same transverse coordinates as the previous points Ai, Bi, but different longitudinal coordinates.
